# EUROPEAN PATENT APPLICATION

(11) **EP 0 635 408 A1**
(43) Date of publication of application: **25.01.1995**
(21) Application number: 94110945.6
(22) Date of filing: 14.07.1994
(51) Int. Cl.: B60R 25/10, E05B 49/00

(54) **A safety system for vehicles**

(30) Priority: 22.07.1993 IT VA930015
(71) Applicant: GEMINI ELETTRONICA s.r.l., I-21020 Bodio Lomnago(Varese) (IT)
(72) Inventor: Ferri, Ermanno, c/o Gemini Elettronica s.r.l., I-21020 Bodio Lomnago (VA) (IT)
(74) Representative: Ferraiolo, Ruggero

(57) **Abstract**

A unit (3) on board a vehicle comprising an immobilizer (10) of the vehicle's engine, a logical unit (4) and a transponder reader (12), and a transponder (13) carried by the vehicle owner, are associated among one another so that, when the vehicle's engine is switched off, the logical unit (4) automatically activates the immobilizer (10).

## Description

The present invention concerns a safety system for vehicles, more especially, a system that can activate protection against theft of the vehicle after the same system has automatically and independently recognized the person authorized for use of the vehicle.

In the description below and in the claims said person will simply be termed - the owner-.

In the field of electronic safety devices for vehicles, more simply termed anti-theft device, the theft protection functions are realized by means of devices suited to preventing the vehicle engine start-up; these devices interrupt the flow of fuel to the engine, of electricity to the starter motor or to the car's original electronic units.

According to the current state of the art the activation and dis-activation of said anti-theft devices take place by the voluntary action of the owner by means of a remote control. This remote control sends the anti-theft device an appropriately encoded message using the broadcasting of electro-magnetic waves, that is both radio waves and infrared waves, or else using the electric connection of an electronic key.

The more evolved anti-theft devices on the market comprise the "alarm" part and the "motor-blocking" part and allow that the latter, henceforth termed - immobilizer -, may be automatically connected after a set period of time from when the vehicle's engine is switched off.

The disadvantage of the present anti-theft devices is that their dis-activation must be controlled by the owner.

The vehicle safety system according to the present invention, as characterized in the claims, comprises a conventional anti-theft device, a logical unit, a transponder reader on board the vehicle and a transponder carried by the user, all four are associated to one another, in order that the anti-theft device be automatically activated after a set period from the switching off of the engine and that it be dis-activated when the intention of starting the engine is made manifest, for example by turning the starter key, jointly to the fact that the reader identifies the presence of said transponder in a given region of space pre-established around the starter key lodging or around the driving seat.

The meaning of "transponder" as intended herein is made clear below. It is an electronic device consisting of a transmitter and a receiver of electro-magnetic waves and by a memory containing a given message. When stimulated by a suitable electro-magnetic wave the transponder responds transmitting the message inscribed in its memory. A transponder is defined as - passive - when it extracts the power required to transmit its message from the arriving wave; a transponder is defined as - active - when it comprises a conventional battery as a source of energy. According to the sate of the art, a transponder is available in various forms: as a card (like a credit card), as a small glass cylinder, as a pill or plastic disc.

The conventional anti-theft device constituting the present system is a device that activates conventional functions against break-ins, generally signalled by acoustic and/or luminous warnings, and the conventional functions of an immobilizer, that is engine-blocking functions, as protection against thefts, such as those that shut-off the flow of fuel to the engine or electricity to various vital devices for vehicles start-up and operating, all said functions being controlled by a remote control.

The main advantage of the present invention lies in the possibility of connecting or disconnencting the means suited to blocking vehicle operation independently from the will of the owner.

In this way, when the owner leaves the vehicle the system automatically connects said means after a pre-established delay from the moment the engine is switched off and when the owner returns to the vehicle and makes manifest his intention of starting again, for example by switching on the instrument panel with the starter key, the device invented is able to recognize the owner and disconnect said means.

Another advantage lies in the fact that the small size of the transponder allows the owner to keep the transponder, for example in the form of a card, inside his driving licence in order that he may not use the vehicle if he doesn't have the licence with him or else allow the transponder in pill shape to be fitted into a vehicle key-holder or into the head of a starter key such as, for example, the case of the remote control-starter key unit, a described in the patent request that the applicant deposited as number VA/93/A/0004.

All the above said does not exclude the use and activation of the normal anti-theft functions controlled by means of a remote control; the latter may control those parts of the safety means that are not controlled by the transponder in the system invented. Essentially, the vehicle protection procedure is totally transparent to the user and provides a degree of protection that is higher than that of any known safety means owing to the fact that it is no longer possible, as in the case of conventional remote controls, to adopt scanning systems to discover the electronic codes transmitted by the remote controls.

Another advantage is that insurance establishments will be definitely sure that the immobilizer acts without the chance of being distractedly forgotten or disconnected by the user. As is made compulsory by some French, British and German insurance companies.

Finally, another advantage that may be greatly appreciated by vehicle leasing companies, is provided by the fact that the system may be fitted with a reader that functions so as to recognize a a transponder for a period of time limited to the period between two instalments of the lease. Only if the owner has paid the instalments the company will enable the reader to recognize the transponder for a further period between two payments.

The invention will be described in more detail through a preferred embodiment and the attached drawing in which
FIG. 1 is a first block diagram,
FIG. 2 is a detail of the diagram in Fig. 1,
FIG. 3 is an embodiment of the system applied on a vehicle and
FIG. 4 is a second block diagram.

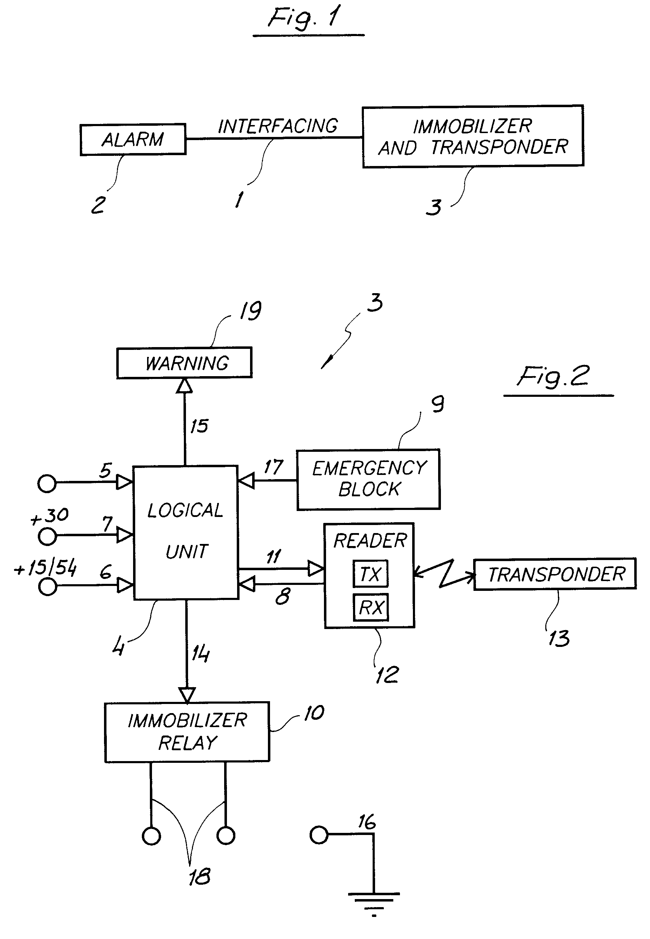

Fig. 1 shows the interface 1 of a conventional alarm device 2 (in this case a vehicle doors control associated to an acoustic warning of any break-ins) with the unit 3 of an immobilizer and a transponder. Interface 1 only serves to signal to the immobilizer the state of connection or disconnection of the alarm device 2.

Fig. 2 shows said unit 3 in detail comprising the logical unit 4 that acquires inputs 5 for alarm state, 6 for positive on starter key +15/54, 7 for battery positive +30, 8 for the transponder reader and 17 for the control of an emergency block (9) to determine the actions to make on outlets 18 of relay 10, the reading request 11 of transponder 13 and hence give the signal of transponder 13 reading performed by reader 12 with signal 8.

The functions of the various signals is briefly explained below so as to later comprehend the functioning of the entire system: signal 7 is the electric power of the system together with mass 16; signal 6 indicates that somebody has turned the engine off or else is about to turn it on; the signal 11 indicates that the logical unit 4 asks transmitter TX to read transponder 13; the signal 8 confirms that transponder 13 has been read through receiver RX; signal 14 is the control of relay 10 of the immobilizer in this case realized with the interruption of electric power to the fuel pump; signal 17 indicates to the logical unit 4 that there is an emergency, that is that the vehicle is operative owing to malfunctioning of the immobilizer system, and signal 15 is directed to the acoustic warning 19 that is activated when the logical unit 4 does not acquire the transponder 13 message by means of reader 12.

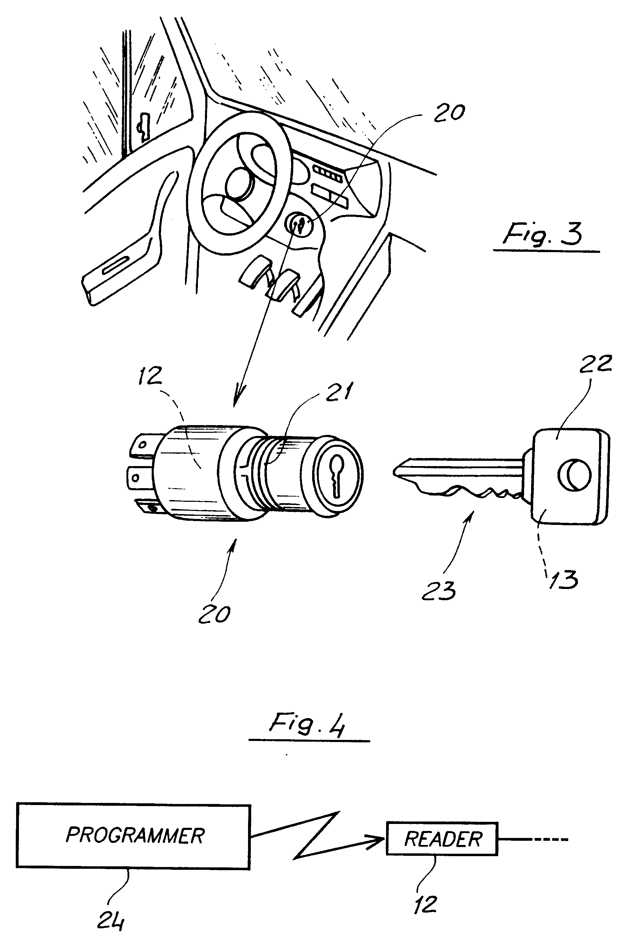

Fig. 3 shows the details of the embodiment on a vehicle of some details from Fig. 2 for a first fitting. The transponder reader 12 is assembled as an integrating part of starter key 23 block 20; especially the antenna 21 used to read and query the transponder is wound around the block 20 so as to read the transponder 13 contained in case 22 of the starter key 23 at a distance of a few centimetres, this is in order to avoid that other transponders possibly held on the key-ring may disturb the reading.

Fig. 4 shows how the logical unit 4 may be programmed through reader 12. To this purpose one uses a programmer 24 that transmits in the same way as transponder 13 a given message. The message, for example, enables the logical unit 4 to recognize a second transponder.

The functioning of the system illustrated in the four figures is described below.

At the moment of switching off the engine by means of key 23, the logical unit 4 interprets the switching ome is true in case the transponder is lost and a new one must be activated to replace it.

In the example illustrated all components are available on the market: for example, relay 10 i a common 40A relay used for the immobilizer, reader 12 isportable and may be adapted to the system with small changes, the warning is a small loud-speaker, logical unit 4 is a unit with known logical ports and transponder 13 is a small glass cylinder 12 mm long with a diameter of 1.8 mm.

## Claims

1. A safety system for vehicles fitted with a warning device (2) to signal any break-in efforts and an immobilizer (10) to perform the blockage of the engine **characterized** in that it comprises a unit (3) on board the vehicle bearing said immobilizer (10), a logical unit (4) and a transponder reader (12) and that comprises a transponder (13) held by the owner, all four (10, 4, 12, 13) associated among one another so that when the vehicle's engine is switched off said logical unit (4) automatically activates said immobilizer (10) and, in the case of engine start-up request, said reader (12) receives and identifies the message from said transponder (13) and, in case of correct identification said logical unit (4) releases said immobilizer (10).

2. Safety system according to claim 1 **characterized** in that an antenna (21) that queries and reads said transponder (13) is fitted on block (20) of the starter key (23) or the immediate surroundings and said reader (12) is close to said block (20) so that the area read may have a range of a few centimetres.

3. Safety system according to claims 1 and 2 **characterized** in that said transponder (13) is contained in the grip of the starter key (23).

4. Safety system according to claims 1 and 2 **characterized** in that said transponder (13) is held in the case in which the key head and remote control for the alarm system to the vehicle are contained.

5. Safety system according to claims 1 and 2 **characterized** in that said transponder (13) is in the form of a card kept in the driving licence of the owner.

6. System according to claims from 1 to 5 **characterized** in that the signal (14) that controls said immobilizer (10) is a coded signal.

7. safety system according to claims from 1 to 6 **characterized** in that said logical unit (4) reads said transponder (13) for a limited period of time, programmed through the electronic programmer (24) comprised in said logical unit (4).

8. Safety system according to claims from 1 to 7 **characterized** in that said logical unit (4) may be associated to new transponders (13), to replace or be added to the transponder (13) already recognized by the it, by means of a control sent by the electronic programmer (24) so that it (13) will recognize them as authorized to dis-connect said immobilizer (10).

9. Safety system according to claims from 1 to 8 **characterized** in that in an alarm condition (5) said immobilizer (10) may not be dis-activated by means of the identification of said transponders (13).

10. Safety system according to claims from 1 to 9 **characterized** in that it comprises an emergency device (9) controlled by said logical unit (4) that is able to make a vehicle operative for a given period of time if said unit (3) should be damaged.

11. Safety system according to claims from 1 to 10 **characterized** in that an alarm signal (19) is activated when, after having switched on the vehicle's instrument panel (6), said reader (12) does not detect said transponders (13) for a pre-set number of readings.
